# FASCICULE DE BREVET EUROPEEN

(11) **EP 2 432 813 B1**
(45) Date de publication et mention de la délivrance du brevet: **30.07.2014**
(21) Numéro de dépôt: 10714322.4
(22) Date de dépôt: 22.04.2010
(51) Int. Cl.: C08G 18/32, C08G 18/42

(54) **STEREOCOMPLEXES DE POLY-L-LACTIDE URETHANE ET DE POLY-D-LACTIDE URETHANE ET PROCEDE D'OBTENTION**
STEREOKOMPLEXE VON POLY-L-LACTIDURETHAN UND POLY-D-LACTIDURETHAN UND HERSTELLUNGSVERFAHREN DAFÜR
STEREOCOMPLEXES OF POLY-L-LACTIDE URETHANE AND POLY-D-LACTIDE URETHANE, AND METHOD FOR PRODUCING SAME

(30) Priorité: 18.05.2009 BE 200900313
(43) Date de publication de la demande: 28.03.2012
(73) Titulaire: Futerro S.A., 7760 Escanaffles (BE)
(72) Inventeur: DUBOIS, Philippe, B-4260 Ciplet (BE); DUQUESNE, Emmanuel, B-7050 Jurbise (BE); LISON, Valérie, B-7170 La Hestre (BE)
(74) Mandataire: Leyder, Francis
(86) Numéro de dépôt international: PCT/EP2010/055371
(87) Numéro de publication internationale: WO 2010/133419

(56) Documents cités:
- WO-A1-2008/037773
- WO-A1-2009/042837
- WO-A1-2009/045881

## Description

La présente invention se rapporte à des stéréocomplexes de poly-L-lactide uréthane et de poly-D-lactide uréthane. L'invention se rapporte également à un procédé d'obtention des dits stéréocomplexes et à leurs utilisations.

Le polylactide ou acide polylactique est un polyester biodégradable bien connu. Il est généralement préparé par polymérisation par ouverture de cycle du lactide, un dimère cyclique préparé par la dépolymérisation contrôlée de l'acide lactique, ce dernier étant obtenu par la fermentation microbienne de matières premières naturelles telles que la cellulose ou l'amidon.

Utilisé initialement dans des applications biomédicales, l'intérêt pour ce biopolymère dans d'autres domaines d'application tels que l'emballage, les fibres ou le non tissé est croissant. Cependant, pour certaines applications, la stabilité thermique du polylactide est insuffisante et une dégradation du polymère est observée.

On a déjà essayé d'augmenter la stabilité thermique du poly-L-lactide ou du poly-D-lactide en formant des stéréocomplexes de poly-L-lactide et de poly-D-lactide, néanmoins, le problème réside dans le procédé d'obtention de ceux-ci. En effet,
une stéréocomplexation complète entre le poly-L-lactide et le pol-D-lactide n'est observée que pour des mélanges substantiellement équimolaires rendant le procédé peu flexible et difficilement applicable industriellement. De plus, la disponibilité moindre du D-lactide actuelle, à l'origine duquel est issu le poly-D-lactide, par rapport au L-lactide affecte la rentabilité économique du procédé industriel pour l'obtention de stéréocomplexes à base de polylactide.

Il est bien connu que l'acide poly-L-lactique ou poly-L-lactide (PL-LA) et l'acide poly-D-lactique ou poly-D-lactide (PD-LA), les deux énantiomères de l'acide polylactique, présentent la particularité de pouvoir former un stéréocomplexe. Ces stéréocomplexes peuvent être obtenus en mélangeant deux solutions, l'une contenant du poly-L-lactide, l'autre du poly-D-lactide, dans un solvant tel le CHCl₃ ou solvants analogues et en versant ce mélange dans un excès de méthanol ce qui provoque la précipitation du stéréocomplexe. L'association de chaînes de poly-L-lactide et de poly-D-lactide génère des mélanges stéréocomplexes caractérisés par une température de fusion pouvant atteindre plus de 210°C dans une gamme de composition stoechiométrique et de masses molaires suffisantes. Cette température de fusion des stéréocomplexes est largement supérieure à la température de fusion des homopolyesters respectifs (+/- 170 °C). Même si de tels stéréocomplexes s'avèrent intéressants du point de vue de leurs propriétés thermomécaniques, leurs obtentions présentent les désavantages mentionnés ci-dessus.

Le document WO 2009/045881 divulgue des stéréocomplexes de PLA formés à partir de blocs oligomères de poly-D-PLA et de poly-L-PLA ayant respectivement une masse moléculaire moyenne en nombre inférieure à 5.000 Dalton. Les oligomères contiennent des groupes fonctionnels qui leur permettent de réagir les uns avec les autres ou avec de l'hexamethylène diisocyanate pour produire un copolymère de masse moléculaire élevée.

Des copolymères de poly-L-lactide uréthane ou de poly-D-lactide uréthane ont aussi été développés, comme indiqué dans le document WO 2008/037773. Ce document divulgue des copolymères de poly-L-lactide uréthane ayant une température de transition vitreuse supérieure à celle de l'homopolymère poly-L-lactide. Cependant, on ne montre pas dans ce document que ces copolymères ont une stabilité thermique (température de fusion) améliorée par rapport aux homopolymères pris séparément. De plus, ce document ne divulgue pas non plus des stéréocomplexes de poly-L-lactide uréthane et de poly-D-lactide uréthane.

Le document WO 2008/037772 décrit aussi entre autre un procédé en masse par extrusion dans une extrudeuse (procédé d'extrusion réactive) pour l'obtention de copolymères de poly-L-lactide uréthane. Les copolymères de poly-L-lactide uréthane produits se caractérisent par une température de transition vitreuse supérieure à celle de l'homopolymère poly-L-lactide. Néanmoins, la température de fusion desdits copolymères est plus faible que celle du poly-L-lactide, ce qui les rend moins stable pour les applications recherchées telle que « textile » ou les applications « durables » comme l'automobile, applications pour lesquelles une tenue thermique supérieure à celle apportée par le poly-L-lactide actuellement disponible sur le marché est requise.

Il existe par conséquent un besoin d'améliorer la stabilité thermique des polylactides c'est-à-dire des polylactides ayant une température de fusion nettement plus élevée qu'environ 170°C.

D'autre part, il existe également un besoin de fournir un procédé simple et efficace pour l'obtention de ces nouveaux polylactides de stabilité thermique améliorée.

L'objet de la présente invention est de fournir des nouveaux polylactide uréthanes ayant une température de fusion supérieure à celle de l'homopolymère poly-L-lactide ou poly-D-lactide ou des copolymères poly-L-lactide uréthane ou poly-D-lactide uréthane.

Un autre objet de la présente invention est de fournir de nouveaux polylactide uréthanes sous forme de stéréocomplexes de poly-L-lactide uréthane et de poly-D-lactide uréthane d'une grande pureté. Par pureté, on entend toute absence de polylactide uréthanes de départ en présence avec le stéréocomplexe.

Un autre objet de la présente invention est de fournir un procédé d'obtention de ces nouveaux polylactide uréthanes au départ d'un mélange en poly-L-lactide uréthane et en poly-D-lactide uréthane dans une gamme de composition massique plus large que le rapport 50/50.

Un autre objet de la présente invention est de fournir un procédé en masse pour l'obtention de ces nouveaux polylactide uréthanes.

Au moins un des objets mentionnés ci-dessus est réalisé par la présente invention.

La demanderesse a maintenant trouvé qu'en mélangeant un poly-L-lactide uréthane avec un poly-D-lactide uréthane, on obtient un produit ayant une stabilité thermique améliorée.

La Demanderesse a maintenant trouvé des stéréocomplexes de polylactide uréthane constitués d'unités de poly-L-lactide uréthane (PL-LA uréthane) et d'unités de poly-D-lactide uréthane (PD-LA uréthane) ayant une température de fusion de loin supérieure à 170°C.

Pour être considéré comme stéréocomplexe, il faut que le produit comporte le moins possible d'unités monochirale de PL-LA uréthane et/ou de PD-LA uréthane car cela réduit la proportion de stéréoçomplexes formés et affecte par conséquent les propriétés thermiques du produit obtenu. Dans le cas de la présente invention, la quantité maximum autorisée d'unités monochirale présente avec le stéréocomplexe est celle qui induit, lors de l'analyse thermique par calorimétrie différentielle à balayage (DSC) de ce dernier, une enthalpie de fusion (ΔH_{f1}) dont la valeur est inférieur ou égale à 15% par rapport à celle mesurée sur le PL-LA uréthane ou le PD-LA uréthane de départ qui est utilisé en quantité majoritaire pour la formation de ce stéréocomplexe. C'est d'ailleurs la raison pour laquelle il est préférable de considérer des stéréocomplexes de polylactide uréthane comprenant de 30 à 70% en poids de PL-LA uréthane et de 70 à 30% en poids de PD-LA uréthane, bien que des stéréocomplexes formés aux dépens de gamme de composition plus large en PL-LA uréthane et PD-LA uréthane soient possibles mais pas sans éviter les inconvénients mentionnés ci-dessus.

Les stéréocomplexes de PL-LA uréthane et de PD-LA uréthane de la présente invention sont renforcés par des segments rigides à fonction uréthane capables d'interagir les uns avec les autres (interactions intermoléculaires) via la formation de ponts hydrogène et d'interactions dipolaires ainsi que par interaction électronique π résultant de la présence éventuelle de cycles aromatiques.

La mise en évidence de la formation d'un stéréocomplexe est réalisée par DSC. Lors de cette analyse, les stéréocomplexes de la présente invention sont caractérisés par un pic de température de fusion supérieure à celle des polylactide uréthanes de départ. La température de fusion des stéréocomplexes est comprise entre 200°C et 250°C, de préférence entre 210 et 245°C lorsque cette dernière est mesurée par DSC.

La présente invention fournit donc un stéréocomplexe de polylactide uréthane caractérisé en ce qu'il comprend de 30 à 70% en poids de poly-L-lactide uréthane et 70 à 30% en poids de poly-D-lactide uréthane et a une température de fusion comprise entre 200 et 250°C mesurée par calorimétrie différentielle à balayage selon la norme IS011357-3 et en ce que le poly-L-lactide et le poly-D-lactide α,ω dihydroxylé utilisés pour l'obtention du poly-L-lactide uréthane et du poly-D-lactide uréthane ont respectivement une masse moléculaire moyenne en nombre supérieure ou égale à 5.000 Dalton, de préférence supérieure ou égale à 10.000 Dalton.

De préférence, le stéréocomplexe de polylactide uréthane de la présente invention comprend de 40 à 60% en poids de poly-L-lactide uréthane et 60 à 40% en poids de poly-D-lactide uréthane. Pour cette gamme de composition, La pureté du stéréocomplexe est particulièrement élevée. En effet, celui-ci se caractérise, après analyse DSC, par un pic de température de fusion unique. Par pic de température de fusion unique, on entend l'absence de pics de fusion correspondant aux PL-LA uréthanes ou aux PD-LA uréthanes de départ.

La demanderesse a également développé un nouveau procédé pour préparer ces stéréocomplexes au départ des monomères de L-lactide et de D-lactide. Ce procédé comprend les étapes suivantes :
a) polymériser le L-lactide pour former un prépolymère de poly-L-lactide α,ω dihydroxylé en présence d'un système catalytique,
b) polymériser le D-lactide pour former un prépolymère de poly-D-lactide α,ω dihydroxylé en présence d'un système catalytique,
c) mettre en contact ledit prépolymère issu de l'étape a) avec un composé diisocyanate et optionnellement une diamine ou un dialcool pour former un poly-L-lactide uréthane,
d) mettre en contact ledit prépolymère issu de l'étape b) avec un composé diisocyanate et optionellement une diamine ou un dialcool pour former un poly-D-lactide uréthane,
e) mélanger le poly-L-lactide uréthane et le poly-D-lactide uréthane issu respectivement des étapes c) et d) dans un rapport massique compris entre 30/70 et 70/30,
f) récupérer le stéréocomplexe de poly-L-lactide uréthane et de poly-D-lactide uréthane.

Le terme « stéréocomplexe de polylactide uréthane » est équivalent au terme stéréocomplexé de poly-L-lactide uréthane et de poly-D-lactide uréthane.

Dans la présente invention, les termes poly-L-lactide (PL-LA) et poly-D-lactide (PD-LA) se réfèrent respectivement à un polymère dihydroxylé dans lequel la majorité des unités répétitives sont des monomères de L-lactide ou de D-lactide.

Dans la présente invention, le (S,S) lactide ou L-lactide est aussi renseigné L-L lactide pour bien insister sur le fait qu'il correspond au dimère de deux molécules du même énantiomère d'acide lactique. De même, le (R,R) lactide ou D-lactide est aussi renseigné D-D lactide.

Dans le procédé de la présente invention, il est souhaitable d'utiliser du lactide de configuration stéréochimique D-D ou L-L ayant une pureté optique aussi appelée pureté isomérique en L ou D d'au moins 98 % en poids, préférablement d'au moins 99,5% en poids. Une pureté isomérique d'au moins 99,8% en poids est vraiment préférée.

De préférence, le L-L lactide utilisé dans le procédé comprend une teneur en D-D lactide inférieure à 0.5 % et le D-D lactide utilisé dans le procédé comprend une teneur en L-L lactide inférieure à 0.5 %. De manière plus préférentielle, le L-L lactide utilisé dans le procédé comprend une teneur en D-D lactide inférieure à 0.2 % et le D-D lactide utilisé dans le procédé comprend une teneur en L-L lactide inférieure à 0.2 %.

De préférence, la pureté chimique du lactide de départ est telle que l'acidité résiduelle est inférieure à 20 méq/kg et l'eau résiduelle est inférieure ou égale à 200 ppm, plus préférablement inférieure ou égale à 50 ppm.

Les prépolymères de poly-L-lactide dihydroxylés (PL-LA) et de poly-D-lactide dihydroxylés (PD-LA) sont obtenus par polymérisation par ouverture de cycle respectivement du L-lactide et du D-lactide avec un premier dialcool ou une première diamine de formule R-(X-H)₂ dans laquelle, X est NH ou O et R est un groupe alkyle ou aryle contenant de 3 à 20 atomes de carbone, préférablement de 6 à 13 atomes de carbone. Le groupe alkyle ou aryle peut être substitué ou non. Le groupe alkyle peut être linéaire, cyclique, saturé ou non saturé. Préférablement, R est un groupe aryle. Plus préférablement, X est NH et R est un groupe aryle. Le dialcool ou la diamine est utilisé comme amorceur de la polymérisation du lactide.

Les amines suivantes peuvent être utilisées comme amorceur: 1,4-butanediamine, 1,6-hexanediamine, 1,4- cyclohexanediamine, 1,4-phényldiamine, 4,4'-diaminodiphénylméthane. Préférablement, la 1,4-phényldiamine ou la 4,4'-diaminodiphénylméthane est utilisée. Plus préférablement la 4,4'-diaminodiphénylméthane est utilisée.

Les alcools suivants peuvent être utilisés comme amorceur : 1,3-propanediol, 1,3-butanediol, 1,4-butanediol, 1,6-hexanediol, 1,7-heptanediol, 1,8-octanediol, xylène glycol. Préférablement, le xylène glycol est utilisé.

L'amorceur utilisé pour la préparation du PL-LA et du PD-LA peut être identique ou différent.

La concentration de lactide et d'amorceur nécessaire pour produire le PL-LA et le PD-LA est déterminée selon la masse moléculaire moyenne en nombre (Mn) souhaité dudit prépolymère.

Le PL-LA et le PD-LA sont caractérisés par une masse moléculaire moyenne en nombre (Mn) supérieure ou égale à 5.000 Dalton, préférablement supérieure ou égale à 10.000 Dalton, plus préférablement supérieure ou égale à 15.000 Dalton. Généralement, le PL-LA et le PD-LA peuvent être caractérisés par une masse moléculaire moyenne en nombre (Mn) comprise entre 5.000 et 40.000 Dalton, préférablement comprise entre 10.000 et 35.000 Dalton.

En fonction des propriétés mécaniques recherchées pour les stéréocomplexes de la présente invention, les masses moléculaires moyennes en nombre des prépolymères PL-LA et PD-LA (et donc la longueur des chaînes) peuvent varier. Dans le procédé de la présente invention, les masses moléculaires en nombre du PL-LA et du PD-LA peuvent être identiques ou différentes.

La prépolymérisation du PL-LA et du PD-LA se fait en présence d'un système catalytique et est bien connue de l'homme de l'art. Le système catalytique comprend au moins un catalyseur de formule générale: (M)(X₁,X₂,X₃...Xₘ)ₙ, tel que décrit dans le document US 6,166,169, comme le bis(2-éthylhexanoate) d'étain, aussi appelé octanoate d'étain (Sn(Oct)₂), et optionnellement un cocatalyseur, comme la triphényle phosphine P(Ph)₃.

Les dérivés uréthane des PL-LA et PD-LA ainsi formés sont ensuite préparés. A cet effet, le PL-LA et le PD-LA sont couplés, indépendamment, à un composé diisocyanate pour former respectivement un poly-L-lactide uréthane et un poly-D-lactide uréthane. Le couplage se fait éventuellement en présence d'un second diol ou diamine appelé agent d'extension.

Le composé diisocyanate, appelé agent de couplage, a pour formule générale: O=C=N-R'-N=C=O dans laquelle R' est un groupe alkyle ou aryle ayant de 4 à 20 atomes de carbone, préférablement ayant de 6 à 13 atomes de carbone. L'alkyle ou l'aryle peut être substitué ou non. L'alkyle peut être linéaire, cyclique, saturé ou insaturé. Préférablement, R' est un groupe aryle.

Les composés diisocyanates suivants peuvent être cités : 1,6-hexaméthylène diisocyanate (HMDI), 4,4'-dicyclohexylméthane diisocyanate, 4,4'-méthylène diphénylisocyanate (MDI), toluène diisocyanate (TDI), p-phénylène diisocyanate. Préférablement, le 4,4'-méthylène diphénylisocyanate est utilisé.
La quantité de diisocyanate à introduire, lors du couplage, est telle que le rapport molaire entre les groupes isocyanates et les groupes hydroxyles du PL-LA et du PD-LA plus les groupements fonctionnels (OH ou NH₂) soit compris entre 1 et 1,6, de préférence entre 1,1 et 1,4. Un tel rapport conduit à la formation de polylactide-uréthane ayant des propriétés de traction et des caractéristiques thermo-mécaniques (module de conservation et température de transition vitreuse) améliorées par rapport à ceux obtenus en mettant en oeuvre un rapport inférieur à 1.

L'agent d'extension a pour formule générale: R"-(X')₂ dans laquelle X' est NH₂ ou OH et R" est un groupe alkyle ou aryle ayant de 3 à 20 atomes de carbone, préférablement de 6 à 13 atomes de carbone. Le groupement alkyle ou aryle peut être substitué ou non. Préférablement, R" est un groupe aryle.
La quantité d'agent d'extension ajoutée est telle que le ratio molaire entre les prépolymères dihydroxylés et l'agent d'extension soit compris dans l'intervalle 40/60 à 75/25. Parmi les amines et les alcools pouvant être utilisés comme agent d'extension, on peut citer ceux précédemment mentionnés en tant qu'amorceur.

L'agent d'extension et l'amorceur peuvent être identiques ou différents.

Suivant un mode de réalisation, R' est un groupe alkyle et au moins R ou R" est un groupe aryle, préférablement R est un groupe aryle et R" est un groupe alkyle ou R est un groupe alkyle et R" est un groupe aryle.

Suivant un autre mode de réalisation, R' et au moins R ou R" est un groupe aryle, préférablement R est un groupe aryle et R" est un groupe alkyle ou R est un groupe alkyle et R" est un groupe aryle.

Suivant un autre mode de réalisation, R, R' et R" sont des groupes aryles.

Suivant un mode de réalisation, le système catalytique utilisé pour la production de PL-LA uréthane et de PD-LA uréthane est le même que celui utilisé pour la préparation des prépolymères PL-LA et PD-LA. Dans ce cas, une quantité supplémentaire du système catalytique utilisé pour la production des prépolymères est ajoutée pour produire le stéréocomplexe de polylactide uréthane.

Suivant un autre mode de réalisation, le système catalytique utilisé pour la production de polylactide-uréthane est celui utilisé pour la préparation des prépolymères. Dans ce mode de réalisation, aucune quantité supplémentaire du système catalytique utilisé pour la production des prépolymères n'est ajoutée pour produire le stéréocomplexe de polylactide uréthane.

Suivant un mode de réalisation de l'invention, la prépolymérisation du PL-LA et du PD-LA se fait en solution, c'est à dire en présence de solvant. Dans ce cas, la prépolymérisation se fait généralement dans le toluène mais d'autres solvants tels que le chloroforme, le dichlorométhane, le p-xylène, le dioxane ou l'acétonitrile peuvent être envisagés. La gamme de température se situe entre 80 et 180°C. Les temps de polymérisation s'étendent de 10 minutes à 30 heures. Les prépolymères PL-LA et PD-LA obtenus sont récupérés par précipitation dans un non-solvant tel que le méthanol, l'éther ou l'heptane. Le méthanol présente l'avantage de solubiliser le monomère et donc de séparer celui-ci du polymère formé.

Suivant un autre mode de réalisation, la prépolymérisation du PL-LA et du PD-LA se fait en masse, c'est à dire en absence de tout solvant, à l'état fondu. Pour la prépolymérisation, la température de mise en oeuvre varie de 80°C à 220°C, préférablement entre 160 et 180°C. Le temps de polymérisation s'étend de 2 minutes à 24 heures, préférablement de 2 minutes à 8 heures, plus préférablement de 2 minutes à 1 heure.

En ce qui concerne l'obtention du PL-LA uréthane et du PD-LA uréthane, le procédé se fait généralement en masse. Par procédé en masse, on entend tout procédé se faisant en absence de solvant, à l'état fondu. Le temps de polymérisation s'étend de 1 à 40 minutes, préférablement de 1 à 30 minutes, plus préférablement de 1 à 15 minutes. Les températures de mise en oeuvre s'échelonnent de 140 à 250 °C, préférablement de 160 à 180°C.

Le stéréocomplexe de polylactide uréthane de la présente invention est ensuite obtenu en mélangeant le PL-LA uréthane et le PD-LA uréthane dans un rapport massique compris entre 30/70 et 70/30, préférablement compris entre 40/60 et 60/40. Plus la proportion s'écarte de manière significative du rapport 30/70-70/30, plus on observe, lors de l'analyse par DSC, une proportion importante de PL-LA uréthane ou de PD-LA uréthane pur, en combinaison avec le stéréocomplexe. Si on réalise par exemple un mélange 90/10 ou 10/90, on obtient un mélange de stéréocomplexe et d'un composé majoritaire de PL-LA uréthane ou PD-LA uréthane ce qui nuit à la pureté du stéréocomplexe. Par pureté, on entend l'absence de pics de fusion correspondant aux polylactide uréthanes de départ. Les stéréocomplexes de polylactide uréthane formés au départ d'un mélange de PL-LA uréthane et de PD-LA uréthane dans le rapport massique compris entre 40/60 et 60/40 sont particulièrement purs. Les stéréocomplexes de la présente invention se caractérisent par une température de fusion comprise entre 200 et 250°C, de préférence comprise entre 210 et 245°C.

Suivant un mode de réalisation, le mélange du PL-LA uréthane et du PD-LA uréthane se fait en solution, généralement dans le chloroforme à température ambiante mais d'autres solvants tels que le dichlorométhane ou l'acétonitrile peuvent être envisagés. Le stéréocomplexe est ensuite récupéré par évaporation du solvant.

Suivant un autre mode de réalisation, le mélange du PL-LA uréthane et du PD-LA uréthane se fait en masse, à l'état fondu. Pour les gammes de composition massique de 40/60 à 60/40, le mélange se fait à une température voisine de la température de fusion du stéréocomplexe majorée de 5 à 10°C. Pour les autres gammes de composition, la température de mise en oeuvre se situe entre la température de fusion des polylactide uréthanes et la température de fusion du stéréocomplexe majorée de 5 à 10°C. Si une température supérieure est utilisée, le stéréocomplexe se dégrade. Le temps de mélange varie de 1 à 30 minutes, préférablement 2 à 10 minutes. Le procédé d'obtention du stéréocomplexe en masse se fait généralement en présence d'agents stabilisants et/ou d'antioxydants bien connus par l'homme de l'art. Ces agents peuvent être ajoutés au cours de la prépolymérisation et/ou de la polymérisation et /ou du mélange. Parmi les agents stabilisant couramment utilisés, on peut citer le (2,4-diterbutylphenyl) pentaerythritol diphosphite aussi appelé Ultranox 626.

Le procédé d'obtention du stéréocomplexe en masse est particulièrement bien applicable à une exploitation industrielle. En effet, il permet une obtention rapide du stéréocomplexe et permet une exploitation directe du polymère contrairement au procédé en solution à la suite duquel le polymère obtenu doit être séparé du solvant, ce qui d'une part augmente la complexité du procédé et d'autre part affecte sa rentabilité économique.

Lorsque la prépolymérisation des polylactides ainsi que la polymérisation des polylactide uréthanes et le mélange de ces derniers se font en masse, ces différentes étapes peuvent se faire soit en réacteur muni d'un agitateur haute viscosité ou par extrusion dans une extrudeuse (ou réacteur horizontal) à simple, double ou multiple vis sous atmosphère inerte en présence d'argon ou d'azote. Néanmoins, elle peut aussi avoir lieu sous atmosphère ambiante.

Lorsque l'ensemble du procédé se fait en masse, suivant un mode de réalisation de l'invention, la prépolymérisation du PL-LA et du PD-LA se fait de manière distincte en réacteur. En fin de prépolymérisation, chaque prépolymère est recueilli, mélangé séparément avec le composé diisocyanate, éventuellement en présence d'un agent d'extension. Chaque mélange est ensuite introduit de manière distincte dans une extrudeuse pour former, par extrusion, respectivement le PL-LA uréthane et le PD-LA uréthane. Après récupération, lesdits polymères sont ensuite mélangés par extrusion dans une extrudeuse, dans le rapport massique selon l'invention

Suivant un autre mode de réalisation, la prépolymérisation et la polymérisation se font en extrudeuse. Dans ce cas, le PL-LA est produit dans une première extrudeuse et le PD-LA est produit dans une deuxième extrudeuse. Chaque prépolymère est ensuite mélangé, indépendamment l'un de l'autre, par extrusion avec un agent de couplage difonctionnel de type diisocyanate aliphatique ou aromatique éventuellement en présence d'un agent d'extension. La prépolymerisation et la polymérisation peuvent se faire soit dans deux extrudeuses distinctes interconnectées, soit dans la même extrudeuse. Les polymères formés sont ensuite mélangés par extrusion dans une extrudeuse dans le rapport massique selon l'invention.

La présente invention se réfère également à l'utilisation du stéréocomplexe de l'invention dans les applications telles que l'emballage, les textiles (fibres), l'électronique et l'automobile.

### Exemples

Dans les exemples et exemples comparatifs, la masse moléculaire moyenne en nombre (Mn) du PL-LA et du PD-LA a été déterminée par chromatographie d'exclusion stérique dans le THF à 35°C, moyennant un étalonnage au départ de huit standards de polystyrène de masses molaire moyenne en nombre connue et comprise entre 600 et 1.700.000 Dalton. L'équipement de chromatographie d'exclusion stérique utilisé est de marque Agilent Technologies 1200 Series. Les échantillons mis en solution dans du THF à raison de 0,1% (poids/volume) ont été élués à un débit de 1 ml/min à travers une précolonne PL gel 10µm et deux colonnes à gradient PL gel 5µm mixed-d. Le volume injecté est de 100µl.

La caractérisation thermique des polymères produits a été réalisée par DSC sur l'appareil DSC Q200 de TA Instruments. L'échantillon est placé dans une capsule en aluminium fermée hermétiquement contenant 5 à 10 mg d'échantillon à analyser, tandis que la référence est une capsule vide en aluminium. L'appareil applique une rampe de chauffe et enregistre la réponse calorimétrique ou thermique de l'échantillon par rapport à la référence. Les caractéristiques utilisées pour l'analyse thermique sont mentionnées pour chaque exemple selon l'invention ainsi que pour chaque exemple comparatif. Les valeurs reprises sont celles obtenues lors du premier passage (ou chauffage) sous flux d'azote. La caractérisation thermique des polymères s'est faite selon la norme ISO11357-3.
Pour tous les exemples et exemples comparatifs, les mentions suivantes qui apparaissent dans les tableaux ont pour signification :
L: PL-LA uréthane,
D: PD-LA uréthane,
T_{f}: température de fusion,
H_{f}: enthalpie de fusion,
- : non détectable

### Exemples 1-4

### 1.Synthèse de polylactide α,ω dihydroxylé

### 1.1 Synthèse de poly-L-lactide α,ω dihydroxylé (PL-LA).

Le L,L-lactide caractérisé par une pureté optique supérieure à 99% a été introduit, à température ambiante et sous atmosphère inerte, dans un réacteur en verre avec 0,3% d'Ultranox 626 comme stabilisant. Le L,L-lactide est ensuite fondu avant introduction du système catalytique (mélange équimolaire de bis(2-ethyl hexanoate d'étain ou octanoate d'étain (Sn(Oct)₂) et de triphénylphosphine dans le toluène) et de l'amorceur, le 1,4-butanediol. Le rapport molaire lactide introduit/étain était de 5.000 et le rapport molaire lactide introduit/1,4-butanediol était de 34. La réaction de polymérisation a été réalisée à 160°C pendant 30 minutes sous agitation de 50 tours/min. Le PL-LA obtenu a été dissout dans du chloroforme, précipité dans 10 volumes de méthanol froid, filtré et séché à l'étuve sous vide à 40°C.

### 1.2 Synthèse de poly-D-lactide α,ω dihydroxylé (PD-LA).

Les conditions de polymérisation décrites au point 1.1 ont été appliquées à la synthèse du PD-LA au départ de D,D-lactide caractérisé par une pureté optique supérieure à 99%.

Les masses moléculaires moyennes en nombre du PL-LA et du PD-LA sont de 10.000 Dalton.

### 2. Synthèse de polylactide uréthane

### 2.1 Synthèse de poly-L-lactide uréthane (PL-LA uréthane)

Le PL-LA synthétisé au point 1.1 a été introduit dans un récipient, auquel le composé diisocyanate (agent de couplage), le 4,4'-méthylène diphénylisocyanate, l'agent d'extension (composé difonctionnel), le 4,4'-diaminodiphénylméthane et 0.3% d'Ultranox 626 par rapport au poids total de PL-LA ont été ajoutés juste avant introduction dans une extrudeuse Haake minilab. Le rapport molaire PL-LA/agent d'extension était de 60/40. L'agent de couplage a été ajouté de manière telle que le rapport molaire entre les groupes isocyanate du diisocyanate et les groupes hydroxyles du PL-LA plus les groupes fonctionels NH2 de l'agent d'extension soit égal à 1,1 ([NCO] / [OH_{PL-LA}+NH₂]=1,1). Le système catalytique résiduel, Sn(Oct)₂/P(Ph)₃, contenu dans le PL-LA catalyse la réaction d'extension de chaîne. La polymérisation s'est faite à 160°C, pendant 5 minutes à 75 tours/min.

### 2.2 Synthèse de poly-D-lactide uréthane (PD-LA uréthane)

Les conditions de polymérisation décrites au point 2.1 ont été appliquées à la synthèse du poly-D-lactide uréthane au départ du PD-LA synthétisé au point 1.2.

Les PL-LA uréthanes et PD-LA uréthanes ont été caractérisés par RMN-¹H mettant en évidence la disparition des bouts de chaînes. En effet, les protons hydroxyméthynes [ δ-C**H**-(CH₃)-OH ~ 4,4 ppm ] du précurseur PLA α,ω-dihydroxylés ne sont plus détectables.

Les PL-LA et PD-LA uréthanes ont également été caractérisés par FTIR (Fourier transform infrared spectroscopy). Cette technique d'analyse a permis de détecter les interactions de type ponts hydrogène. Le spectre infra rouge nous informe de l'apparition de signaux au environ de 1600-1500 cm⁻¹ correspondant aux -CH aromatiques, ainsi qu'aux environs de 1550-1650cm⁻¹ correspondant aux fonctions -NH et d'une large bande aux environs de 3500 cm⁻¹ correspondant à des fonctions -OH et ponts hydrogène.

La caractérisation par chromatographie d'exclusion stérique n'a pas pu être réalisée en raison de l'insolubilité partielle des PL-LA et PD-LA uréthanes dans le THF, attestant de la sorte de l'augmentation des masses molaires et de l'établissement des interactions interchaines telles que mises en évidence par FTIR.

### 3. Synthèse de stéréocomplexes de PL-LA uréthane et de PD-LA uréthane en solution.

Divers mélanges de PL-LA uréthane et de PD-LA uréthane tels que produits au point 2 ont été réalisés dans les proportions massiques telles que mentionnées dans le tableau 1. Les mélanges ont été effectués, à température ambiante, en solution dans le chloroforme à une concentration de 1g/dl. Après évaporation du solvant sous agitation à température ambiante, les échantillons ont été analysés par DSC. L'analyse thermique s'est faite selon les caractéristiques suivantes :
- température de départ: 35°C
- vitesse de chauffe: 10°C/min
- température finale: 250°C
- vitesse de refroidissement: 10°C/min
- température finale de refroidissement: 0°C

Le tableau 1 illustre les différentes caractéristiques thermiques des mélanges PL-LA uréthane/PD-LA uréthane en fonction de la composition.

**Tableau 1**

| Exemples | Composition | T_{f1} (°C) | ΔH_{f1} (j/g) | T_{f2} (°C) | ΔH_{f2} (j/g) |
|---|---|---|---|---|---|
| | 100 % L | 149,2 | 37,7 | - | - |
| 1 | 70 % L - 30 % D | - | - | 208,2 | 48,6 |
| 2 | 60 % L - 40 % D | - | - | 208 | 60,7 |
| 3 | 50 % L - 50 % D | - | - | 208 | 63,4 |
| 4 | 40 % L - 60 % D | - | - | 207,2 | 58 |
| | 100 % D | 144,5 | 38,7 | - | - |

Pour les exemples 1 à 4, un seul pic de fusion apparaît entre 207,2 et 208,2°C. Cette température de fusion unique, plus élevée que celle du PL-LA uréthane (149,2°C) et du PD-LA uréthane (144,5°C) est interprétée comme la preuve de la formation d'un stéréocomplexe de polylactide uréthane particulièrement pur.

### Exemples comparatifs 1-4

A titre comparatif, les PL-LA uréthanes et les PD-LA uréthanes utilisés pour les exemples 1-4 ont été employés pour réaliser en solution divers mélanges massiques dans les proportions telles que mentionnées dans le tableau 2. Les mélanges et l'analyse thermique ont été effectués dans les mêmes que celles mentionnées pour les exemples 1-4 (voir point 3).

Le tableau 2 illustre les différentes caractéristiques thermiques des mélanges PL-LA uréthane/PD-LA uréthane en fonction de la composition.

**Tableau 2**

| Exemples comparatifs | Composition | T_{f1} (°C) | ΔH_{f1} (j/g) | T_{f2} (°C) | ΔH_{f2} (j/g) |
|---|---|---|---|---|---|
| | 100 % L | 149,2 | 37,7 | - | - |
| 1 | 90 % L - 10 % D | 149,9 | 20,4 | 206,7 | 13,8 |
| 2 | 80 % L - 20 % D | 147,7 | 10,4 | 208,1 | 30 |
| 3 | 20 % L - 80 % D | 143,7 | 23 | 206,9 | 23,9 |
| 4 | 10 % L - 90 % D | 139,3 | 28,8 | 206,1 | 13,3 |
| | 100 % D | 144,5 | 38,7 | - | - |

Les stéréocomplexes formés au départ de PL-LA uréthane et de PD-LA uréthane dans une gamme de composition en dehors de celle de l'invention contiennent une part importante de PL-LA ou de PD-LA uréthane comme en témoigne l'enthalpie de fusion, ΔH_{f1}, pour ces compositions.

### Exemples 5-9

Ces exemples illustrent la formation, en solution, de stéréocomplexes de PL-LA uréthane et de PD-LA uréthane, les PL-LA et PD-LA uréthanes étant produits au départ de PL-LA et de PD-LA caractérisés par une masse moléculaire moyenne en nombre de 26.000 Dalton. L'obtention de tels prépolymères s'est faite suivant les mêmes conditions de synthèse que celles mentionnées aux points 1.1 et 1.2 hormis que le rapport molaire lactide introduit/1,4-butanediol était de 100.

La synthèse du PL-LA uréthane et du PD-LA uréthane s'est faite ensuite au départ desdits prépolymères. Le PL-LA a été introduit dans un récipient, auquel le composé diisocyanate, le 4,4'-méthylène diphénylisocyanate ; l'agent d'extension, le 4,4'-diaminodiphénylméthane et, 0.3% d'Ultranox 626 par rapport au poids total de PL-LA ont été ajoutés juste avant introduction dans une extrudeuse Haake minilab. Le rapport molaire PL-LA/agent d'extension était de 60/40. Le composé diisocyanate a été ajouté de manière telle que le rapport molaire entre les groupes isocyanate du diisocyanate et les groupes hydroxyles du PL-LA plus les groupes fonctionels NH₂ de l'agent d'extension soit égal à 1,1 ([NCO] / [OH_{PL-LA}+NH₂]=1,1). Le système catalytique résiduel, Sn(Oct)₂/P(Ph)₃, contenu dans le PL-LA catalyse la réaction d'extension de chaîne. La polymérisation s'est faite à 180°C pendant 5 minutes à 75 tours/min.

Les mélanges de PL-LA uréthane et de PD-LA uréthane ont été réalisés en solution dans le chloroforme à une concentration de 1g/dl à la température ambiante. Après évaporation du solvant sous agitation à température ambiante, les échantillons ont été analysés par DSC. L'analyse thermique s'est faite selon les caractéristiques suivantes:
- température de départ: 35°C
- vitesse de chauffe: 10°C/min
- température finale: 250°C
- vitesse de refroidissement: 10°C/min
- température finale de refroidissement: 0°C

Le tableau 3 illustre les différentes caractéristiques thermiques des mélanges PL-LA uréthane/PD-LA uréthane en fonction de la composition.

**Tableau 3**

| Exemples | Composition | T_{f1} (°C) | ΔH_{f1} (j/g) | T_{f2} (°C) | ΔH_{f2} (j/g) |
|---|---|---|---|---|---|
| | 100 % L | 165,2 | 36,6 | - | - |
| 5 | 70 % L - 30 % D | 154,5 | 5,2 | 225,1 | 47,4 |
| 6 | 60 % L - 40 % D | - | - | 226,3 | 63,2 |
| 7 | 50 % L - 50 % D | - | - | 227,1 | 63,5 |
| 8 | 40 % L - 60 % D | - | - | 225,1 | 60,7 |
| 9 | 30 % L - 70 % D | 160,2 | 6,2 | 222,8 | 48,1 |
| | 100 % D | 162,4 | 48,4 | - | - |

Pour les exemples 6 à 8, un pic de fusion unique apparaît entre 225,1 et 227,1°C traduisant la formation d'un stéréocomplexe particulièrement pur pour les compositions mentionnées. Cet exemple illustre aussi que lorsque les masses moléculaires des PL-LA et PD-LA utilisées pour la synthèse des polylactide uréthanes augmentent, il en résulte une augmentation de la température de fusion des stéréocomplexes formés.

### Exemples comparatifs 5-8

Le PL-LA uréthane et le PD-LA uréthane tels qu'utilisés pour les exemples 5-9 ont été mélangés dans les proportions citées dans le tableau 4. Les mélanges et l'analyse thermique par DSC ont été réalisés dans les conditions telles que mentionnées pour ces dits exemples.

**Tableau 4**

| Exemples Comparatifs | Composition | T_{f1} (°C) | ΔH_{f1} (j/g) | T_{f2} (°C) | ΔH_{f2} (j/g) |
|---|---|---|---|---|---|
| | 100 % L | 165,2 | 36,6 | - | - |
| 5 | 90 % L - 10 % D | 162,9 | 28,6 | 223,9 | 15,4 |
| 6 | 80 % L - 20 % D | 155,7 | 9,5 | 224,8 | 30,4 |
| 7 | 20 % L - 80 % D | 161,4 | 24 | 224,4 | 27,8 |
| 8 | 10 % L - 90 % D | 162 | 40,2 | 221,7 | 12,2 |
| | 100 % D | 162,4 | 48,4 | - | - |

### Exemples 10-14

Ces exemples illustrent la formation, en solution, de stéréocomplexes de PL-LA uréthane et de PD-LA uréthane. Le PL-LA uréthane et le PD-LA uréthane ont été produits au départ de PL-LA et de PD-LA, caractérisés par une masse moléculaire moyenne en nombre respective de 10.000 et 26.000 Dalton, dans les conditions telles que décrites précédemment. Les mélanges ont été effectués en solution dans le chloroforme à une concentration de 1g/dl à la température ambiante. Après évaporation du solvant sous agitation à température ambiante, les échantillons ont été analysés par DSC. L'analyse thermique s'est faite selon les caractéristiques suivantes :
- température de départ: 0°C
- vitesse de chauffe: 10°C/min
- température finale: 250°C
- vitesse de refroidissement: 10°C/min
- température finale de refroidissement: 0°C

Le tableau 5 illustre les différentes caractéristiques thermiques des mélanges PL-LA uréthane/PD-LA uréthane en fonction de la composition.

**Tableau 5**

| Exemples | Composition | T_{f1} (°C) | ΔH_{f1} (j/g) | T_{f2} (°C) | ΔH_{f2} (j/g) |
|---|---|---|---|---|---|
| | 100 % L | 149,5 | 31,4 | - | - |
| 10 | 70 % L - 30 % D | 148,3 | 4,2 | 213,3 | 40,2 |
| 11 | 60 % L - 40 % D | - | - | 213,1 | 51,4 |
| 12 | 50 % L - 50 % D | - | - | 213,5 | 51,2 |
| 13 | 40 % L - 60 % D | - | - | 213,4 | 54,9 |
| 14 | 30 % L - 70 % D | 166,5 | 7,1 | 213,4 | 43,3 |
| | 100 % D | 167,6 | 51,7 | - | - |

Lors du mélange d'un PL-LA uréthane, synthétisé au départ de PL-LA possédant une masse moléculaire plus faible (Mₙ : 10.000 Dalton), avec un PD-LA uréthane synthétisé au départ de PD-LA possédant une masse moléculaire plus élevée (Mₙ: 26.000 Dalton), on observe également le phénomène de formation de stéréocomplexes purs pour les exemples 11 à 13.

### Exemples comparatifs 9-12

Le PL-LA uréthane et le PD-LA uréthane tels qu'utilisés pour les exemples 10-14 ont été mélangés dans les proportions citées dans le tableau 6. Les mélanges et l'analyse thermique par DSC ont été réalisés selon les conditions telles que mentionnées pour ces dits exemples.

**Tableau 6**

| Exemples Comparatifs | Composition | T_{f1} (°C) | ΔH_{f1} (j/g) | T_{f2} (°C) | ΔH_{f2} (j/g) |
|---|---|---|---|---|---|
| | 100 % L | 149,5 | 31,4 | - | - |
| 9 | 90 % L - 10 % D | 149,7 | 22,2 | 211 | 14,7 |
| 10 | 80 % L - 20 % D | 149,9 | 13,6 | 213,1 | 22,3 |
| 11 | 20 % L - 80 % D | 166,7 | 22,3 | 211,6 | 24,1 |
| 12 | 10 % L - 90 % D | 167,3 | 38 | 210,2 | 11,9 |
| | 100 % D | 167,6 | 51,7 | - | - |

### Exemple 15

Cet exemple illustre la formation en masse, c'est à dire en absence de solvant, de stéréocomplexes de PL-LA uréthane et de PD-LA uréthane.
Des prépolymères de PL-LA et de PD-LA de masse moléculaire moyenne en nombre de 18.000 Dalton ont d'abord été synthétisés suivant les mêmes conditions que celles mentionnées aux points 1.1 et 1.2. hormis que le rapport molaire lactide introduit /1,4-butanediol était de 70.

La synthèse du PL-LA uréthane et du PD-LA uréthane s'est faite ensuite au départ desdits prépolymères. Le PL-LA a été introduit dans un récipient, auquel le 4,4'-méthylène diphénylisocyanate ; l'agent d'extension, le 4,4'-diaminodiphénylméthane et 0.3% d'Ultranox 626 par rapport au poids total de PL-LA ont été ajoutés juste avant introduction dans une extrudeuse Haake minilab. Le rapport molaire PL-LA/agent d'extension était de 60/40. Le composé diisocyanate a été ajouté de manière telle que le rapport molaire entre les groupes isocyanate du diisocyanate et les groupes hydroxyles du PL-LA plus les groupes fonctionels NH₂ de l'agent d'extension soit égal à 1,1 ([NCO] / [OH_{PL}-_{LA}+NH₂]=1,1). Le système catalytique résiduel, Sn(Oct)₂/P(Ph)₃, contenu dans le PL-LA catalyse la réaction d'extension de chaîne. La polymérisation s'est faite à 170°C pendant 5 minutes à 75 tours/min. La synthèse du PD-LA uréthane s'est faite dans les mêmes conditions au départ du PD-LA.

Le PL-LA uréthane et le PD-LA uréthane ainsi produits ont ensuite été mélangés en quantité équivalente (50/50) dans une extrudeuse Haake minilab. Le mélange a eu lieu pendant 2 minutes à 230°C avec une vitesse de rotation de 150 tours/min. L'analyse thermique des échantillons s'est faite par DSC selon les caractéristiques suivantes :
- température de départ: -40°C
- vitesse de chauffe: 10°C/min
- température finale: 250°C
- vitesse de refroidissement: 20°C/min
- température finale de refroidissement: -40°C

On observe le phénomène de stéréocomplexation unique avec la disparition des pics de fusion correspondant aux PL-LA uréthane et PD-LA uréthane introduits. Le tableau 7 illustre les résultats obtenus.

**Tableau 7**

| Exemples | Composition | T_{f1} (°C) | ΔH_{f1} (j/g) | T_{f2} (°C) | ΔH_{f2} (j/g) |
|---|---|---|---|---|---|
| | PL-LA uréthane (L) | 161,5 | 40,1 | - | - |
| | PD-LA uréthane (D) | 161,0 | 44,7 | - | - |
| 15 | 50 % L - 50 % D | - | - | 215,7 | 68,1 |

### Exemple 16

Le PL-LA uréthane et le PD-LA uréthane synthétisés au départ de PL-LA et de PD-LA de masse moléculaire moyenne en nombre de 26.000 Dalton ont été mélangés en quantité équivalente (50/50) en présence de 0,3% d'Ultranox 626 dans une extrudeuse Haake minilab. Le mélange a eu lieu en masse, c'est à dire en absence de solvant, pendant 5 minutes à 230°C avec une vitesse de rotation de 75 tours/min. L'analyse thermique des échantillons s'est faite par DSC selon les caractéristiques suivantes :
- température de départ: 35°C
- vitesse de chauffe: 10°C/min
- température finale: 250°C
- vitesse de refroidissement: 10°C/min
- température finale de refroidissement: 0°C

Le tableau 6 illustre les résultats obtenus.

**Tableau 8**

| Exemple | Composition | T_{f1} (°C) | ΔH_{f1} (j/g) | T_{f2} (°C) | ΔH_{f2} (j/g) |
|---|---|---|---|---|---|
| | PL-LA uréthane (L) | 165,7 | 48,6 | - | - |
| | PD-LA uréthane (D) | 163,4 | 49,6 | - | - |
| 16 | 50% L - 50 % D | - | - | 234,2 | 81,27 |

L'analyse par DSC du mélange présente un seul pic de fusion à 234,2°C représentatif de la présence d'un stéréocomplexe pur.

## Revendications

1. Stéréocomplexe de polylactide uréthane **caractérisé en ce qu'**il comprend de 30 à 70% en poids de poly-L-lactide uréthane et 70 à 30% en poids de poly-D-lactide uréthane et a une température de fusion comprise entre 200 et 250°C mesurée par calorimétrie différentielle à balayage selon la norme ISO11357-3 et **en ce que** le poly-L-lactide et le poly-D-lactide α,ω dihydroxylé utilisés pour l'obtention du poly-L-lactide uréthane et du poly-D-lactide uréthane ont respectivement une masse moléculaire moyenne en nombre supérieure ou égale à 5.000 Dalton, de préférence supérieure ou égale à 10.000 Dalton.

2. Stéréocomplexe de polylactide uréthane selon la revendication 1 **caractérisé en ce qu'**il comprend de 40 à 60% en poids de poly-L-lactide uréthane et 60 à 40% en poids de poly-D-lactide uréthane.

3. Procédé d'obtention d'un stéréocomplexe selon les revendications 1 à 2 comprenant les étapes suivantes :
a) polymériser le L-lactide pour former un prépolymère de poly-L-lactide α,ω dihydroxylé en présence d'un système catalytique,
b) polymériser le D-lactide pour former un prépolymère de poly-D-lactide α,ω dihydroxylé en présence d'un système catalytique,
c) mettre en contact ledit prépolymère issu de l'étape a) avec un composé diisocyanate et optionnellement une diamine ou un dialcool pour former un poly-L-lactide uréthane,
d) mettre en contact ledit prépolymère issu de l'étape b) avec un composé diisocyanate et optionnellement une diamine ou un dialcool pour former un poly-D-lactide uréthane,
e) mélanger le poly-L-lactide uréthane et le poly-D-lactide uréthane issu respectivement des étapes c) et d) dans un rapport massique compris entre 30/70 et 70/30,
f) récupérer le stéréocomplexe de poly-L-lactide uréthane et de poly-D-lactide uréthane.

4. Procédé selon la revendication 3 **caractérisé en ce que** l'étape e) se fait dans un rapport massique compris entre 40/60 et 60/40.

5. Procédé selon une des revendications 3 à 4 **caractérisé en ce que** le L-lactide utilisé dans l'étape a) et le D-lactide utilisé dans l'étape b) a une pureté isomérique d'au moins 98%, préférablement d'au moins 99,5%, plus préférablement d'au moins 99,8%.

6. Procédé selon une des revendications 3 à 5 **caractérisé en ce que** la polymérisation du L-lactide à l'étape a) se fait en présence d'un diol ou d'une diamine de formule R1-(X-H)₂ dans laquelle X est NH ou O et R1 est un groupe alkyle ou aryle contenant de 3 à 20 atomes de carbone.

7. Procédé selon une des revendications 3 à 5 **caractérisé en ce que** la polymérisation du D-lactide à l'étape b) se fait en présence d'un diol ou d'une diamine de formule R1-(X-H)₂ dans laquelle X est NH ou O et R1 est un groupe alkyle ou aryle contenant de 3 à 20 atomes de carbone.

8. Procédé selon une des revendications 6 ou 7 **caractérisé en ce que** la polymérisation du L-lactide ou du D-lactide se fait en présence d'une diamine dans laquelle R1 est un groupe aryle contenant de 3 à 20 atomes de carbone.

9. Procédé selon une des revendications 3 à 8 **caractérisé en ce que** les masses moléculaires moyenne en nombre du prépolymère de poly-L-lactide α,ω dihydroxylé issu de l'étape a) et du prépolymère de poly-D-lactide α,ω dihydroxylé issu de l'étape b) sont identiques.

10. Procédé selon une des revendications 3 à 8 **caractérisé en ce que** les masses moléculaires moyenne en nombre du prépolymère de poly-L-lactide α,ω dihydroxylé issu de l'étape a) et du prépolymère de poly-D-lactide α,ω dihydroxylé issu de l'étape b) sont différentes.

11. Procédé selon les revendications 2 à 10 **caractérisé en ce que** les étapes a), b), e) se font en solution à température ambiante et les étapes c) et d) se font en masse

12. Procédé selon les revendications 2 à 10 **caractérisé en ce que** les étapes a) à e) se font en masse.

13. Utilisation d'un stéréocomplexe selon les revendications 1 à 2 dans les applications telles que l'emballage, les textiles, l'électronique, l'automobile.

## Patentansprüche

1. Stereokomplex von Poly-Lactidurethan, **dadurch gekennzeichnet, dass** er 30 bis 70 Gew.-% Poly-L-Lactidurethan und 70 bis 30 Gew.-% Poly-D-Lactidurethan umfasst und eine Schmelztemperatur zwischen 200 und 250 °C inklusive hat, gemessen durch dynamische Differenzkalorimetrie gemäß der Norm ISO 11357-3, und dass das Poly-L-Lactid und das α,ω dihydroxylierte Poly-D-Lactid, die für die Herstellung des Poly-L-Lactidurethans und des Poly-D-Lactidurethan verwendet werden, eine jeweilige zahlenmäßige durchschnittliche molekulare Masse über oder gleich 5.000 Dalton, vorzugsweise über oder gleich 10.000 Dalton, haben.

2. Stereokomplex von Poly-Lactidurethan nach Anspruch 1 **dadurch gekennzeichnet, dass** er 40 bis 60 Gew.-% Poly-L-Lactidurethan und 60 bis 40 Gew.-% Poly-D-Lactidurethan umfasst.

3. Verfahren zur Herstellung eines Stereokomplexes nach den Ansprüchen 1 bis 2, das die folgenden Schritte umfasst:
a) Polymerisieren des L-Lactids, um bei Anwesenheit eines katalytischen Systems ein α,ω dihydroxyliertes Poly-L-Lactid-Prepolymer zu bilden,
b) Polymerisieren des D-Lactids, um bei Anwesenheit eines katalytischen Systems ein α,ω dihydroxyliertes Poly-D-Lactid-Prepolymer zu bilden,
c) Inkontaktversetzen des Prepolymers aus Schritt a) mit einer Diisocyanatverbindung und optional mit einem Diamin oder einem Dialkohol, um ein Poly-L-Lactidurethan zu bilden,
d) Inkontaktversetzen des Prepolymers aus Schritt b) mit einer Diisocyanatverbindung und optional mit mit einem Diamin oder einem Dialkohol, um ein Poly-D-Lactidurethan zu bilden,
e) Mischen des Poly-L-Lactidurethans und des Poly-D-Lactidurethans aus den jeweiligen Schritten c) und d) in einem Massenverhältnis zwischen 30/70 und 70/30 inklusive,
f) Rückgewinnen des Stereokomplexes aus Poly-L-Lactidurethan und aus Poly-D-Lactidurethan.

4. Verfahren nach Anspruch 3, **dadurch gekennzeichnet, dass** der Schritt e) bei einem Massenverhältnis zwischen 40/60 und 60/40 inklusive erfolgt.

5. Verfahren nach einem der Ansprüche 3 bis 4, **dadurch gekennzeichnet, dass** das in Schritt a) verwendete L-Lactid und das in Schritt b) verwendete D-Lactid eine isomerische Reinheit von mindestens 98 %, vorzugsweise von mindestens 99,5 %, noch vorzugsweiser von mindestens 99,8 %, haben.

6. Verfahren nach einem der Ansprüche 3 bis 5, **dadurch gekennzeichnet, dass** die Polymerisierung des L-Lactids in Schritt a) bei Anwesenheit eines Diols oder eines Diamins der Formel R1-(X-H)₂ erfolgt, wobei X NH oder O ist und R1 eine Alkyl- oder Arylgruppe mit 3 bis 20 Kohlenstoffatomen ist.

7. Verfahren nach einem der Ansprüche 3 bis 5, **dadurch gekennzeichnet, dass** die Polymerisierung des D-Lactids in Schritt b) bei Anwesenheit eines Diols oder eines Diamins der Formel R1-(X-H)₂ erfolgt, wobei X NH oder O ist und R1 eine Alkyl- oder Arylgruppe mit 3 bis 20 Kohlenstoffatomen ist.

8. Verfahren nach einem der Ansprüche 6 oder 7, **dadurch gekennzeichnet, dass** die Polymerisierung des L-Lactids oder des D-Lactids bei Anwesenheit eines Diamins erfolgt, wobei R1 eine Arylgruppe mit 3 bis 20 Kohlenstoffatomen ist, erfolgt.

9. Verfahren nach einem der Ansprüche 3 bis 8, **dadurch gekennzeichnet, dass** die zahlenmäßig durchschnittlichen molekularen Massen des α,ω dihydroxylierten Poly-L-Lactid-Prepolymers aus Schritt a) und des α,ω dihydroxylierten Poly-D-Lactid-Prepolymers aus Schritt b) identisch sind.

10. Verfahren nach einem der Ansprüche 3 bis 8, **dadurch gekennzeichnet, dass** die zahlenmäßig durchschnittlichen molekularen Massen des α,ω dihydroxylierten Poly-L-Lactid-Prepolymers aus Schritt a) und des α,ω dihydroxylierten Poly-D-Lactid-Prepolymers aus Schritt b) unterschiedlich sind.

11. Verfahren nach den Ansprüchen 2 bis 10, **dadurch gekennzeichnet, dass** die Schritte a), b), e) in Lösung bei Raumtemperatur und die Schritte c) und d) in der Masse erfolgen.

12. Verfahren nach den Ansprüchen 2 bis 10, **dadurch gekennzeichnet, dass** die Schritte a) bis e) in der Masse erfolgen.

13. Verwendung eines Stereokomplexes nach den Ansprüchen 1 bis 2 in den Anwendungen wie Verpackung, Textilien, Elektronik, Automobil.

## Claims

1. A stereocomplex of polylactide urethane **characterized in that** it comprises 30 to 70 % by weight of poly-L-lactide urethane and 70 to 30 % by weight of poly-D-lactide urethane and has a melting point of between 200 and 250°C measured by differential scanning calorimetry as per standard ISO11357-3, and **in that** the α,ω-dihydroxyl poly-L-lactide and poly-D-lactide used to obtain poly-L-lactide urethane and poly-D-lactide urethane respectively have a number average molecular weight of 5,000 Dalton or higher, preferably 10,000 Dalton or higher.

2. The stereocomplex of polylactide urethane according to claim 1 **characterized in that** it comprises 40 to 60 % by weight of poly-L-lactide urethane and 60 to 40 % by weight of poly-D-lactide urethane.

3. A method for obtaining a stereocomplex according to claims 1 to 2 comprising the following steps:
a) polymerizing the L-lactide to form a prepolymer of α,ω-dihydroxyl poly-L-lactide in the presence of a catalytic system;
b) polymerizing the D-lactide to form a prepolymer of α,ω-dihydroxyl poly-D-lactide in the presence of a catalytic system;
c) contacting the said prepolymer derived from step a) with a diisocyanate compound and optionally a diamine or dialcohol to form a poly-L-lactide urethane;
d) contacting the said prepolymer derived from step b) with a diisocyanate compound and optionally a diamine or dialcohol to form a poly-D-lactide urethane;
e) mixing the poly-L-lactide urethane and poly-D-lactide urethane derived from steps c) and d) respectively in a weight ratio of between 30:70 and 70:30;
f) collecting the stereocomplex of poly-L-lactide urethane and poly-D-lactide urethane.

4. The method according to claim 3 **characterized in that** step e) is performed in a weight ratio of between 40:60 and 60:40.

5. The method according to one of claims 3 to 4 **characterized in that** the L-lactide used at step a) and the D-lactide used at step b) have an isomeric purity of at least 98 %, preferably at least 99.5 %, further preferably at least 99.8 %.

6. The method according to one of claims 3 to 5 **characterized in that** the polymerization of the L-lactide at step a) is performed in the presence of a diol or diamine of formula R1-(X-H)₂ where X is NH or O and R1 is an alkyl or aryl group containing 3 to 20 carbon atoms.

7. The method according to one of claims 3 to 5 **characterized in that** the polymerization of the D-lactide at step b) is performed in the presence of a diol or diamine of formula R1-(X-H)₂ where X is NH or O and R1 is an alkyl or aryl group containing 3 to 20 carbon atoms.

8. The method according to one of claims 6 or 7 **characterized in that** the polymerization of the L-lactide or D-lactide is performed in the presence of a diamine wherein R1 is an aryl group containing 3 to 20 carbon atoms.

9. The method according to one of claims 3 to 8 **characterized in that** the number average molecular weights of the prepolymer of α,ω-dihydroxyl poly-L-lactide derived from step a) and of the prepolymer of α,ω-dihydroxyl poly-D-lactide derived from step b) are identical.

10. The method according to one of claims 3 to 8 **characterized in that** the number average molecular weights of the prepolymer of α,ω-dihydroxyl poly-L-lactide derived from step a) and of the prepolymer of α,ω-dihydroxyl poly-D-lactide derived from step b) are different.

11. The method according to claims 2 to 10 **characterized in that** steps a), b), e) are conducted in solution at ambient temperature and steps c) and d) are conducted in bulk.

12. The method according to claims 2 to 10 **characterized in that** steps a) to e) are conducted in bulk.

13. The use of a stereocomplex according to claims 1 to 2 in applications such as packaging, textiles, electronics, automobile.
